**Europäisches Patentamt**

**European Patent Office**

**Office européen des brevets**

(11) Numéro de publication: **0 189 354 B1**

# (12) FASCICULE DE BREVET EUROPEEN

(45) Date de publication de fascicule du brevet: **01.04.92**   (51) Int. Cl.⁵: **C03B 37/04**

(21) Numéro de dépôt: **86400135.9**

(22) Date de dépôt: **23.01.86**

---

(54) Perfectionnements à la fabrication de fibres minerales.

---

(30) Priorité: **25.01.85 FR 8501042**

(43) Date de publication de la demande:
**30.07.86 Bulletin 86/31**

(45) Mention de la délivrance du brevet:
**01.04.92 Bulletin 92/14**

(84) Etats contractants désignés:
**AT BE CH DE FR GB IT LI LU NL SE**

(56) Documents cités:
**EP-A- 0 091 380**
**FR-A- 1 310 159**
**FR-A- 1 428 609**

(73) Titulaire: **ISOVER SAINT-GOBAIN**
**Les Miroirs 18, avenue d'Alsace**
**F-92400 Courbevoie(FR)**

(72) Inventeur: **L'inventeur a renoncé àsa désignation**

(74) Mandataire: **Le Vaguerese, Sylvain Jacques et al**
**SAINT-GOBAIN RECHERCHE 39, quai Lucien Lefranc**
**F-93304 Aubervilliers Cedex(FR)**

---

## Description

L'invention est relative à des perfectionnements de techniques de production de fibres minérales. Plus précisément, l'invention se rapporte aux techniques dans lesquelles le matériau destiné à constituer les fibres est conduit à l'état fondu dans un centrifugeur creux à la périphérie duquel se situent un grand nombre d'orifices. Dans ces techniques, le matériau sous l'effet de la force centrifuge est expulsé sous forme de filaments qui sont projetés dans un courant gazeux à température et vitesse élevées, courant qui longe la paroi périphérique du centrifugeur.

Ces techniques de production de fibres ont fait l'objet de très nombreuses publications. Parmi ces dernières, on peut se reporter aux demandes de brevets européens n° 0 091 866 et 0 091 380.

Comme il ressort de la littérature antérieure et notamment les deux documents précités, les qualités requises pour les fibres produites recouvrent une grande variété suivant les utilisations envisagées. Même si l'on ne considère que les produits destinés à l'isolation acoustique et thermique, des différences profondes peuvent apparaître.

Ainsi les produits de ce type les plus abondamment fabriqués sont des feutres dits "légers" en raison de leur faible masse volumique. Ces feutres pour atteindre les meilleures performances thermiques sont avantageusement constitués de fibres très fines (diamètre inférieur à 5 micromètres).

Les feutres légers offrent une résistance à la compression limitée. Pour d'autres utilisations, on préfère par conséquent un isolant constitué de fibres moins fines mais plus résistantes.

Ceci ne constitue qu'un exemple des différences de qualité des produits qui peuvent être demandées par les utilisateurs. Il va de soi que les conditions de production ne sont pas les mêmes suivant le type de produit recherché.

La fabrication des fibres répondant à ces exigences doit satisfaire des impératifs de rendement et de coût de production. Dans tous les cas, quels que soient les produits préparés, il est nécessaire d'atteindre la production la plus importante possible, sur une installation donnée et au moindre coût.

Ces différentes constatations font qu'il est souhaitable de pouvoir disposer d'instruments de production susceptibles de fonctionner suivant des ensembles de conditions très diversifiés.

Ainsi la technique décrite dans la publication européenne n° 0 091 380, offre les moyens de production de feutres présentant un ensemble de propriétés isolantes et mécaniques qui répond aux demandes les plus usuelles. Les fibres sont produites à débit élevé et sont fines. La longueur de ces fibres est telle que leur arrangement dans le feutre est bien isotrope dans le plan de réception d'une part, et d'autre part confère au feutre les propriétés mécaniques requises.

On peut considérer, toutes choses égales par ailleurs, que la résistance du feutre est d'autant meilleure que les fibres sont plus longues. Pour obtenir une distribution homogène des fibres dans le feutre, il semble préférable cependant que leur longueur soit relativement limitée. Ces considérations ne sont cependant pas parfaitement généralisables. La structure des fibres et notamment le fait que leurs caractéristiques individuelles soient très voisines, intervient également de façon complexe dans l'établissement des propriétés isolantes. Nous en verrons quelques aspects plus loin à propos de la mise en oeuvre de l'invention.

En fonction de la demande, on sait produire des fibres très fines et longues suivant les techniques décrites précédemment dans les documents précités. Néanmoins, ceci n'est obtenu ordinairement qu'en réduisant de façon substantielle la quantité produite sur chaque installation.

On sait aussi maintenir simultanément la finesse des fibres et la production en accroissant par exemple l'effet d'étirage obtenu au moyen du courant gazeux chaud. Mais ordinairement les fibres obtenues sont alors plus courtes et moins régulières. On produit de cette façon des isolants dont la masse volumique est relativement élevée. Il s'agit par exemple de panneaux disposés sur des toits en terrasse, désignés sous l'appellation panneaux "roof", et qui supportent des revêtements d'étanchéité.

L'invention se propose de fournir des moyens permettant de diversifier les combinaisons de qualités obtenues par ces techniques. En particulier, l'invention se propose la production de fibres fines et longues, la quantité de fibres produite sur chaque installation étant maintenue à un niveau élevé et ceci sans changer les caractéristiques principales du centrifugeur à savoir le nombre d'orifices, la dimension du centrifugeur, etc...

Ce but de l'invention a été atteint en modifiant le fonctionnement du générateur de courant gazeux chaud utilisé pour l'étirage des fibres, de telle sorte que le courant soit émis le long du centrifugeur en formant une enveloppe dont la forme, au moins à proximité du point d'émission, est celle d'un hyperboloïde de révolution. En d'autres termes, la direction de propagation du courant gazeux émis fait un certain angle avec la parallèle à l'axe du centrifugeur.

La paroi périphérique du centrifugeur est, soit cylindrique, soit de façon plus fréquente légèrement conique. La direction du courant gazeux fait alors un certain angle avec la génératrice correspondante du cylindre ou du cône.

Le plan tangent à la paroi périphérique du centrifugeur, qui selon le cas est parallèle ou sensiblement parallèle à l'axe du centrifugeur, peut contenir la direction d'émission mais il est possible également que celle-ci fasse un angle limité avec ce plan.

Dans le premier cas, en supposant que la conicité du centrifugeur est négligeable, l'émission est réalisée au col de l'hyperboloïde ; dans le second cas, cette émission se situe en amont ou en aval de ce col en restant relativement peu éloignée de celui-ci.

Si en première approximation on suppose l'émission faite à partir du col de l'hyperboloïde, la direction de propagation du courant dans le plan tangent à la paroi périphérique peut se décomposer en une composante selon la génératrice de contact dite "axiale", et une composante perpendiculaire à la première dite "tangentielle".

Dans les modes traditionnels, la direction d'émission est approximativement réduite à la première composante. Selon l'invention, la composante tangentielle est au contraire relativement importante, même si elle reste sensiblement plus petite que la composante axiale.

Bien évidemment, le courant voit sa direction initiale modifiée au fur et à mesure qu'il progresse. Cette modification est due notamment à l'induction de l'air ambiant et des phénomènes que cette induction provoque comme la dépression sous le centrifugeur.

Néanmoins, dans la zone située à proximité du centrifugeur, c'est-à-dire celle dans laquelle s'exercent pleinement les actions conduisant à l'étirage des fibres, on peut considérer que la direction d'origine est pratiquement inchangée.

Dans la pratique antérieure, le générateur de courant gazeux est avantageusement du type décrit dans la demande de brevet EP 0 091 380. Il s'agit d'un générateur constitué par un brûleur à combustion interne dont la construction particulière présente divers avantages. Ce type de brûleur est ainsi facile à mettre en oeuvre. Son fonctionnement est stable pour une gamme de régimes étendue. Il permet aussi d'obtenir une très grande régularité d'émission tout autour du centrifugeur. Il permet encore la production d'un courant gazeux à température et vitesse très élevées tout en restant d'un encombrement limité. Le brûleur doit en effet prendre place autour du centrifugeur dans un espace relativement restreint.

Dans ce type de brûleur la combustion s'effectue dans une chambre annulaire qui n'est pas cloisonnée. Les gaz de combustion s'échappent par un orifice continu constituant une fente dont la largeur est volontairement étroite (de l'ordre d'une dizaine de millimètres) pour engendrer un courant à vitesse élevée.

Le mode de circulation et de combustion des gaz à l'intérieur du brûleur est particulièrement important pour le fonctionnement. En pratique on s'efforce de faire en sorte que le mélange gazeux combustible soit admis de façon à ce qu'il circule en sens inverse des gaz de combustion. Cette circulation est établie sans séparation de ces deux flux gazeux qui sont donc au contact l'un de l'autre. Par ailleurs, le mélange gazeux combustible est introduit de façon à longer une paroi portée à température élevée de sorte que la rapidité de son inflammation soit accrue. La température élevée de cette paroi résulte pour une part important du rayonnement provenant de la paroi qui lui fait face, laquelle se trouve au contact direct avec les gaz de combustion.

Par ailleurs, il est connu de la publication FR-A-1 428 609, un brûleur engendrant un courant gazeux comportant une composante tangentielle. La structure de ce brûleur et notamment la présence d'un nombre restreint de points d'admission des gaz et la direction d'admission dans la chambre de combustion n'offrent cependant pas la souplesse d'utilisation des brûleurs du type de ceux du brevet EP-A-0 091 380.

L'analyse des documents antérieurs montre qu'ils n'offrent pas de moyens satisfaisants pour des techniques selon l'invention qui comprennent la mise en oeuvre de courants gazeux assurant un étirage énergique bien uniforme suivant une direction comportant une composante tangentielle.

Les recherches ayant abouti à l'invention ont montré qu'il était possible de réaliser des brûleurs du type à flux inversé fonctionnant dans les conditions de vitesse et de température antérieures et permettant en plus d'émettre le courant gazeux suivant une direction présentant une composante tangentielle.

Dans la demande antérieure EP 0 091 380, le brûleur décrit comprend une multiplicité de conduits d'admission des gaz combustibles disposés sur toute la périphérie de la chambre annulaire de combustion. Ces conduits sont orientés suivant l'axe principal du brûleur.

L'invention propose un brûleur à combustion interne comprenant une chambre de combustion de forme annulaire débouchant sur une ouverture de détente et des éléments délimitant un orifice d'émission circulaire continu, la direction de cet orifice étant sensiblement parallèle à l'axe du brûleur, l'alimentation en mélange gazeux combustible étant faite dans la chambre de combustion par une série de conduits d'alimentation disposés à intervalles réguliers débouchant dans la chambre, ces conduits étant dirigés de sorte que l'alimentation des gaz se fasse le long d'une paroi de la chambre de combustion et à contre-courant du mouvement des gaz de combustion, lesquels longent une paroi faisant face à la paroi longée par le mélange gazeux combustible à son admission, les conduits d'alimentation sont dirigés de façon à faire un angle avec la parallèle à l'axe du brûleur supérieur à 30° et inférieur à 75° et, de préférence, inférieur à 60°.

On constate dans cette disposition que les gaz sortant par l'orifice continu présentent une composante tangentielle sans qu'il soit nécessaire d'avoir recours à des volets ou moyens analogues à la sortie du brûleur, destinés à leur imposer une direction.

La composante tangentielle que l'on communique suivant cette disposition de l'invention est réglable essentiellement en choisissant l'inclinaison des conduits d'admission avec l'axe du brûleur. De façon générale, cette composante tangentielle est d'autant plus importante que l'inclinaison est plus forte.

Dans la pratique, l'inclinaison des conduits d'admission est limitée par la géométrie du dispositif et la nécessité de répartir l'admission sur un grand nombre d'orifices pour obtenir l'uniformité de fonctionnement recherchée sur tout le brûleur. Cette inclinaison ne dépasse pas ordinairement 75°, et de préférence 60°. De même, si l'inclinaison devient très faible, l'effet produit est très peu sensible de sorte qu'en pratique cette inclinaison n'est pas inférieure à 30°.

Comme nous le verrons à propos des figures, la direction d'émission dépend aussi de la géométrie de la fente à partir de laquelle s'effectue cette émission.

Cette fente se présente sous forme d'un orifice annulaire cylindrique, mais il est possible aussi de lui conférer une conicité limitée.

Selon le cas, l'émission se fera au col de l'hyperboloïde ou à proximité de celui-ci.

En dehors de la géométrie du système, le régime du brûleur lui-même peut influencer la direction d'émission. On montre ainsi qu'un accroissement de température des gaz émis par le brûleur entraîne une réduction relative de la composante tangentielle et inversement. En pratique cependant, les conditions dans lesquelles l'étirage des fibres est effectué, sont enfermées dans des limites relativement étroites pour ce qui concerne les températures. Par suite, les modifications correspondant aux variations de régime sont très limitées.

Il convient encore de souligner que dans la pratique le plus fréquemment l'inclinaison de la direction du courant gazeux est dans le "sens" de rotation du centrifugeur. On entend par là que la composante tangentielle de cette direction est de même sens que le mouvement du centrifugeur. Comme nous le verrons plus loin, cette disposition favorise l'allongement des fibres produites.

L'invention est maintenant décrite de façon plus détaillée en faisant référence aux planches de dessins dans lesquelles :

- la figure 1 présente, en coupe, une vue partielle d'un ensemble pour la formation de fibres selon l'invention,
- la figure 2 est une vue en perspective d'une partie du brûleur de la figure 1,
- la figure 3 illustre, schématiquement, le sens préféré des composantes de la vitesse des gaz par rapport à la rotation du centrifugeur,
- la figure 4 est un diagramme de la pression pour différents types de brûleurs en fonction de la finesse des fibres produites,
- la figure 5 est un diagramme montrant l'amélioration des qualités isolantes des produits fabriqués selon l'invention,
- la figure 6 est un diagramme montrant la résistance mécanique de produits selon l'invention et celle de produits fabriqués dans des conditions traditionnelles,
- les figures 7a, b, c et d illustrent les conditions géométriques relatives à la direction d'émission du courant gazeux dans la mise en oeuvre de l'invention.

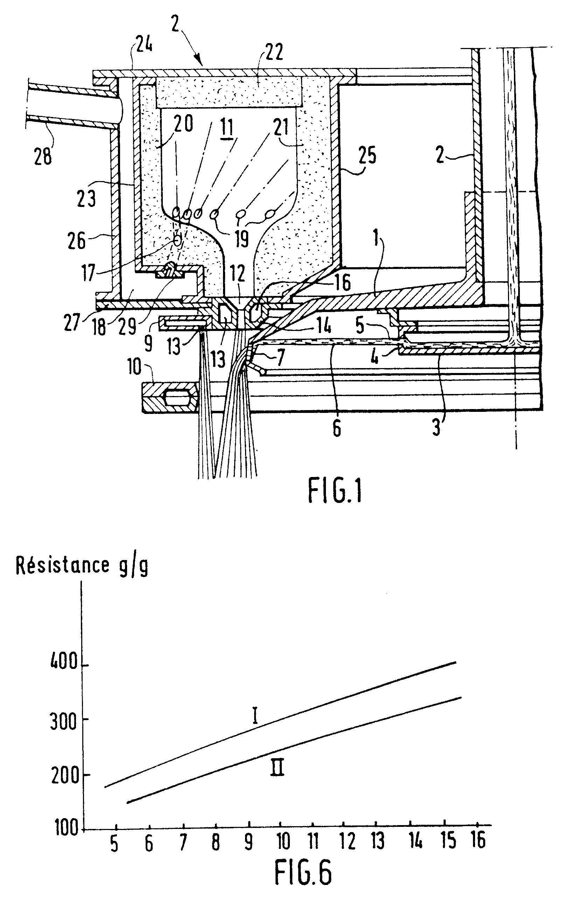

L'ensemble présenté à la figure 1 regroupe les divers éléments utilisés dans les techniques de production de fibres par centrifugation et étirage au moyen d'un courant gazeux chaud, telles que celles qui font l'objet des demandes de brevet européen n° 0 091 866 et 0 091 380. Cet ensemble est composé par un centrifugeur 1, fixé sur un arbre 2. L'arbre et le centrifugeur sont animés d'un mouvement de rotation rapide au moyen d'un moteur non représenté. De façon traditionnelle, l'arbre 2 est creux et le matériau destiné à former les fibres s'écoule depuis des moyens d'alimentation (four, avant-corps, filière) dans l'arbre 2 jusqu'au "panier" 3. Le matériau étirable se répand sur le fond du panier. Le panier 3 est également entraîné en rotation de telle sorte que le matériau est projeté sur la paroi périphérique 4 qui est percée d'orifices 5 et de là, sous forme de filets volumineux 6, sur la paroi périphérique 7 du centrifugeur 1. Cette paroi périphérique 7 est percée de très nombreux orifices par lesquels le matériau passe en formant des filaments, dits "primaires", relativement fins. Ce sont ces filaments qui sont projetés hors du centrifugeur dans le courant gazeux émis par le brûleur 8. Sous l'action de ce courant, l'étirage des filaments primaires conduit à la formation des fibres.

L'ensemble présenté à la figure 1 comprend, en outre, une couronne de soufflage 9 qui engendre une nappe gazeuse qui enveloppe le courant gazeux émis par le brûleur 8. Cette nappe permet un meilleur contrôle de la progression du courant émis par le brûleur qu'elle limite, et dont elle évite le contact avec les éléments statiques voisins notamment la couronne d'induction 10. Cette nappe gazeuse protège aussi le courant gazeux du brûleur de l'air environnant, en particulier du ralentissement occasionné par l'induction de cet air environnant.

La couronne d'induction 10 est utilisée dans cet ensemble pour réchauffer la partie du centrifugeur qui se trouve la plus exposée au refroidissement au contact de l'air ambiant. Il est très souhaitable en effet que la paroi périphérique soit à une température bien uniforme sur toute sa hauteur pour maintenir identiques les conditions dans lesquelles se forment les filaments quelle que soit la position des orifices qui les émettent sur cette paroi 7.

Les dispositions présentées ci-dessus sont celles qui sont le plus souvent utilisées. Il va de soi que toutes ces dispositions ne sont pas impératives et que de nombreuses variantes peuvent être mises en oeuvre selon les enseignements de l'invention. Dans toutes les variantes se trouvent cependant le centrifugeur 1 avec sa paroi percée d'orifices et un brûleur annulaire 8 émettant un courant gazeux chaud et à grande vitesse le long de la paroi périphérique 7.

Dans la forme schématisée à la figure 1, le brûleur annulaire 8 est composé d'une chambre de combustion 11 délimitée par des parois en matériau réfractaire. Cette chambre de combustion communique avec l'extérieur par une ouverture de détente 12 qui s'étend sur toute la périphérie du brûleur. L'ouverture de détente 12 est prolongée par des éléments 13, 14 en acier réfractaire destinés à canaliser et à diriger les gaz de combustion vers la périphérie du centrifugeur. Ces éléments 13 et 14 forment ainsi une fente continue de largeur constante. Pour éviter leur déformation, les éléments 13 et 14 sont refroidis par une circulation d'eau dans leurs cavités 15 et 16. L'alimentation et l'évacuation de l'eau ne sont pas représentées.

Le brûleur est alimenté en mélange combustible gazeux par les conduits d'admission 17. Ces conduits sont disposés à intervalles réguliers tout autour de la chambre. Pour uniformiser les conditions d'alimentation, tous les conduits 17 sont en communication avec un compartiment d'alimentation annulaire unique 18.

Les conduits d'alimentation 17 débouchent chacun par une ouverture 19 dans la chambre de combustion 11 le long d'une paroi réfractaire 20. La configuration de la chambre de combustion 11 est telle que les gaz de combustion, avant leur émission, longent une paroi 21 qui fait face à la paroi 20. L'admission du mélange combustible dans la chambre 11 s'effectue à contre-courant de l'évacuation des gaz brûlés pour faciliter les échanges thermiques et par suite l'inflammation du mélange. L'inflammation est aussi facilitée par le fait que la paroi 21 au contact des gaz les plus chauds rayonne intensément en direction de la paroi 20 qui lui fait face et dont elle accroit la température.

Les conduits d'alimentation 17 sont inclinés par rapport à l'axe général du dispositif, de la façon détaillée précédemment. A titre d'indication, on a représenté la direction axiale de ces conduits en traits mixtes.

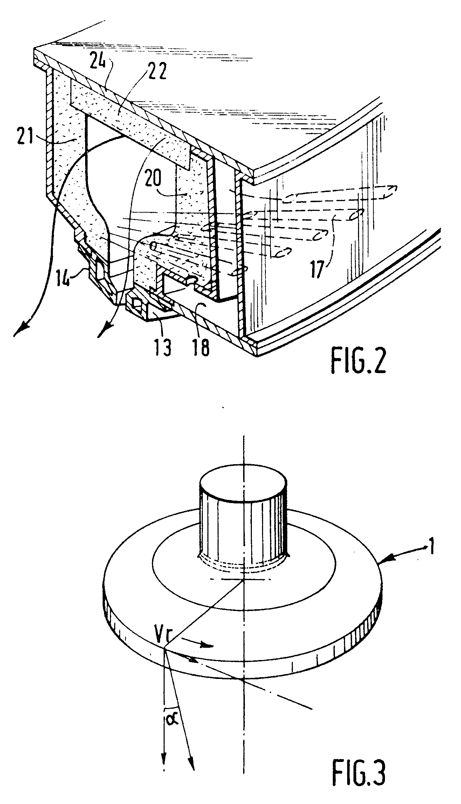

La figure 2 montre schématiquement par des flèches le cheminement du gaz dans la chambre de combustion. L'inclinaison initiale de l'admission par rapport à l'axe du brûleur influence toute la trajectoire et se retrouve dans la direction du gaz émis. La combustion dans la chambre entraine bien évidemment un élévation considérable de température et de vitesse.

Le calcul montre, et l'expérience confirme, que la composante tangentielle de la vitesse des gaz se conserve pratiquement alors que la vitesse globale s'accroit. Dans l'établissement de l'inclinaison des conduits d'alimentation 17 il est nécessaire d'avoir un angle beaucoup plus élevé que l'angle que fait la direction des gaz en sortie du brûleur avec l'axe de l'ensemble. Nous en verrons des exemples plus loin. En pratique il en résulte que les conduits 17 sont généralement très inclinés.

Il est nécessaire, pour ce type de brûleur, de bien maintenir la combustion à l'intérieur de la chambre 11. Si la flamme se développe même partiellement à l'extérieur, le brûleur perd une partie de son efficacité.

Dans une certaine mesure, l'inclinaison de la direction initiale des gaz dans la chambre de combustion entraine un allongement du cheminement des gaz dans cette chambre. Il en résulte une tendance à une combustion plus complète. Par suite, le fait d'utiliser l'injection inclinée permet d'accroitre la charge thermique du brûleur.

Des essais ont été effectués dans les conditions de l'invention et dans les conditions traditionnelles. La comparaison des résultats montre les possibilités nouvelles offertes en opérant selon l'invention.

Dans ces essais, le dispositif centrifugeur est du type de celui représenté à la figure 1. Le diamètre du centrifugeur est de 600 mm et la vitesse périphérique est d'environ 60 m/s. Le brûleur est alimenté en mélange air/gaz naturel de Groningue. Le mélange air-gaz est réglé pour que la température d'émission à la sortie du brûleur soit de 1550°C.

L'injection s'effectue par une série de 48 orifices disposés régulièrement. Les orifices ont un diamètre de 16 mm. Pour le dispositif traditionnel, la direction des orifices 17 est parallèle à l'axe du brûleur. Dans la forme selon l'invention, les orifices 17 sont inclinés. Les essais rapportés ci-après correspondent respectivement à des inclinaisons choisies de façon que pour les conditions de fonctionnement retenues, l'écoulement des gaz en sortie du brûleur soit respectivement de l'ordre de 16° et 22° par rapport à l'axe du brûleur.

Dans le brûleur conduisant à un courant gazeux émis suivant un angle de 16°, l'inclinaison des conduits d'alimentation 17 est légèrement supérieure à 50° ; pour celui dans lequel le gaz est émis en faisant un angle de 22°, l'inclinaison des conduits est d'environ 68°.

La fabrication du brûleur est avantageusement réalisée par moulage de ciment réfractaire coulé sur une matrice, qui est ensuite détruite. Comme indiqué dans la demande française 2 524 610, la matrice est par exemple en polystyrène expansé. La destruction dans ce cas peut être obtenue par dissolution au moyen d'un solvant.

Pour constituer les conduits, la matrice peut être complétée par des tubes plus rigides par exemple en polychlorure de vinyle. Il est aussi possible bien entendu de forer les conduits une fois la paroi réfractaire constituée.

Comme indiqué à la figure 1 il est préférable, pour la commodité de la fabrication, de constituer la chambre de combustion par un assemblage de plusieurs pièces réfractaires. Dans la forme représentée, cette chambre comprend trois parties correspondant respectivement aux parois 20, 21 et 22.

Les parois réfractaires de la chambre de combustion sont avantageusement maintenues en position par une enveloppe métallique formée de plusieurs éléments 23, 24, 25 assemblés de façon traditionnelle par des moyens non représentés.

Un ensemble de parois métalliques 26, 27 constitue avantageusement une enceinte double dans laquelle le mélange combustible circule et se réchauffe avant de pénétrer dans la chambre de combustion.

Le réglage de l'alimentation en mélange combustible est effectué en amont du brûleur en modifiant la pression à l'aide de moyens traditionnels non représentés. Le mélange gazeux est conduit jusqu'à la double enceinte par une ou plusieurs canalisations 28.

Avantageusement, l'extrémité des conduits d'alimentation 17, située du côté du compartiment 18, est disposée une virole 29. La section interne des viroles 29 peut être choisie de façon à diaphragmer l'ouverture des conduits 17.

Dans tous les essais comparatifs effectués, des produits de même micronaire sont préparés suivant la méthode traditionnelle avec le brûleur dont le soufflage est parallèle à l'axe, et suivant la méthode selon l'invention avec un brûleur imposant une composante tangentielle.

A défaut d'étudier complètement la structure des fibres prises isolément, on choisit de comparer des feutres de même micronaire car il leur correspond des propriétés, notamment isolantes, qui devraient être analogues si les fibres étaient identiques d'un essai à l'autre. Les variations constatées sont autant de manifestations de modifications dans la structure des fibres.

La mesure du micronaire s'effectue suivant la norme ASTM-D-1148-78. Selon cette norme, une masse donnée de fibres (2 ; 2,5 ; ... ; 3,5 ; 6 g) enchevêtrées est disposée dans un compartiment parcouru par un courant gazeux sous une pression donnée. La résistance au passage du courant gazeux, que l'on mesure par le débit du gaz circulant, constitue le micronaire. Ce micronaire est donc d'autant plus petit que les fibre sont plus fines et plus longues et s'opposent donc davantage au passage du courant gazeux.

L'opération la plus simple pour modifier le micronaire dans un sens déterminé consiste à modifier la pression du brûleur. Bien évidemment cette pression dépend de la pression du mélange gazeux combustible injecté dans le brûleur, et cette pression se traduit aussi directement sur la vitesse des gaz émis, vitesse et pression croissant ensemble.

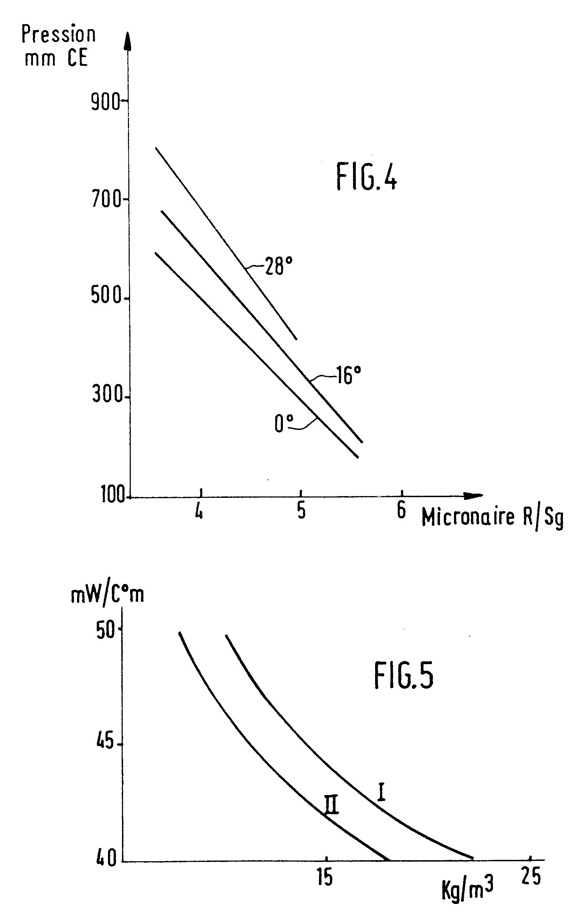

La figure 4 est un diagramme montrant les variations de pression dynamique à la sortie du brûleur, exprimée en millimètres de colonne d'eau, des trois brûleurs indiqués précédemment en fonction du micronaire des fibres produites. On constate pour toutes les conditions, pour un même micronaire, que la pression est d'autant plus forte que la composante tangentielle de la vitesse d'émission des gaz de combustion est plus élevée.

Dans les deux cas correspondant à l'invention (inclinaison d'émission 16° et 22°), la composante tangentielle est dans le sens de rotation du centrifugeur.

On peut supposer que si la pression doit être plus élevée pour avoir le même micronaire, c'est en raison de ce que la propagation du courant gazeux s'effectuant partiellement dans le sens de rotation du centrifugeur, pour maintenir l'action d'étirage des gaz, il est nécessaire d'avoir une vitesse globale des gaz et par conséquent une pression plus élevées. Il résulte de ceci que la consommation énergétique est également un peu plus élevée dans le cas de l'invention.

Les avantages de la mise en oeuvre de l'invention se situent principalement dans les qualités de fibres que l'on obtient. Ces qualités mécaniques et isolantes sont particulièrement avantageuses lorsque les fibres sont très fines. Comme nous l'avons indiqué l'obtention de fibres très fines (micronaires inférieurs à 3/5 g) résulte principalement de l'accroissement de la pression du brûleur.

Dans les configurations traditionnelles on constate que l'augmentation de pression conduit à des fibres très courtes si elle devient trop forte. Avec un courant à composante tangentielle dans le sens de rotation du centrifugeur comme représenté à la figure 3, les fibres fines obtenues sont moins "heurtées" au moment de leur formation et, par suite, sont sensiblement plus longues.

Expérimentalement les meilleurs résultats, en ce qui concerne la longueur des fibres pour le mode de mise en oeuvre de l'invention, sont obtenus lorsque le brûleur fonctionne de telle façon que la composante tangentielle de la vitesse des gaz émis est sensiblement égale à la vitesse périphérique du centrifugeur.

L'obtention de fibres longues n'est pas systématiquement recherchée. Pour les applications dans lesquelles les fibres plus courtes sont préférées, on utilisera soit un brûleur traditionnel soit, éventuellement, un brûleur selon l'invention mais dont la composante tangentielle des gaz émis est de sens inverse à la rotation du centrifugeur. On constate en effet dans ce cas, la formation de fibres encore plus courtes que celles obtenues selon le mode traditionnel.

En outre dans ce cas, la mise en oeuvre du courant gazeux à composante tangentielle de sens inverse à celui de rotation du centrifugeur permet, toutes choses égales par ailleurs, de réduire la pression du brûleur et donc la consommation énergétique.

Dans les exemples de mises en oeuvre correspondant à l'invention, et dans les conditions de vitesse indiquées précédemment pour le centrifugeur, on s'efforce donc, pour avoir des fibres longues, de régler la vitesse tangentielle à 60 m/s environ. Pour les deux cas considérés, ceci a été obtenu pour une vitesse globale d'émission de l'ordre de 210 m/s.

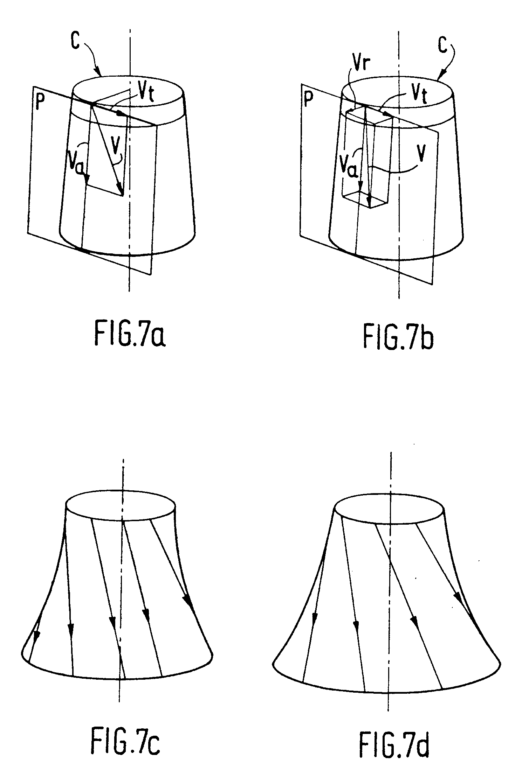

L'amélioration du produit selon l'invention apparaît dans ses qualités isolantes surtout pour les produits à faible masse volumique. La figure 5 présente les résultats de mesure de conductivité thermique en fonction de la masse volumique du feutre constitué.

Dans les deux séries d'essais dont les résultats correspondent aux courbes représentées, les fibres sont du même micronaire : F 2,5/5 g. Le débit du matériau est identique : 14 tonnes/jour pour chaque centrifugeur. Le brûleur selon l'invention (courbe II) forme un courant gazeux dont la composante tangentielle est inclinée à 16°. La courbe I correspond à un brûleur traditionnel.

On remarque, toutes les autres conditions étant identiques, que le feutre obtenu dans les conditions de l'invention offre de meilleures performances ce qui se traduit par une conductivité thermique moindre pour un feutre de même masse volumique, ou ce qui est équivalent, une même conductivité thermique pour une masse volumique plus faible.

On peut attribuer cette amélioration à un allongement et à une meilleure homogénéité d'ensemble des fibres. L'étude statistique du diamètre des fibres produites selon l'invention montre en particulier une très faible dispersion. L'histogramme du diamètre des fibres est très étroit et ne présente qu'un seul maximum.

L'appréciation de la longueur des fibres résulte également de la résistance mécanique à la traction des feutres isolants. On comprend que les feutres sont d'autant plus résistants que les fibres qui les constituent sont plus longues. En effet, la cohésion mécanique est fonction de l'enchevêtrement des fibres. Plus celles-ci sont longues, plus les liaisons assurées aux points de contact par le liant sont nombreuses.

La figure 6 indique les résultats de mesures de résistance à la traction d'échantillons de feutres produits dans des conditions traditionnelles et selon l'invention.

Dans les essais reproduits, le débit des centrifugeurs a été maintenu à 20 tonnes/jour, ce qui constitue une production importante et d'ordinaire n'est pas favorable à l'obtention de fibres très performantes. Le micronaire pour ces essais est réglé à F 4/5 g.

Le brûleur selon l'invention conduit à une composante tangentielle de 16° environ.

Les mesures sont effectuées suivant les prescriptions de la norme ASTM-C-681-76. Pour cette norme, des anneaux découpés dans le feutre sont soumis à une traction jusqu'à rupture.

Le diagramme de la figure 6 est établi pour des masses volumiques de feutre variables.

On constate sur ce diagramme une résistance accrue pour les feutres fabriqués selon l'invention (courbe I) par rapport à ceux correspondant aux conditions traditionnelles (courbe II).

D'autres avantages résultent de la mise en oeuvre des conditions de l'invention. En particulier la distribution des fibres sur le convoyeur sur lequel elles sont recueillies immédiatement après leur production est améliorée de façon sensible. Ceci provient d'un effet du type de celui qui a été décrit antérieurement dans la demande de brevet européen 0 072 300.

On constate que le voile de fibres qui se forme en aval du centrifugeur est largement plus épanoui lorsque le brûleur produit un courant gazeux à composante tangentielle.

L'accroissement de la largeur du voile de fibres est tel qu'il est possible de réduire, voire même de supprimer, les moyens utilisés traditionnellement pour répartir les fibres sur la totalité de la largeur du convoyeur.

L'épanouissement du voile de fibres résulte bien évidemment de la modification introduite dans l'écoulement des courants gazeux. Les figures 7a à 7d illustrent schématiquement ce qu'est l'écoulement dans le mode selon l'invention.

Les figures 7a et 7c représentent le cas dans lequel l'émission des gaz se fait dans la position que nous avons nommée le "col de l'hyperboloïde" La direction V de l'écoulement gazeux est comprise dans le plan P tangeant à la paroi périphérique du centrifugeur C.

Cette direction V se décompose en une direction "axiale" Va et une direction tangentielle Vt. Le plus couramment, la direction tangentielle est de même sens que la rotation du centrifugeur.

La circulation des gaz, en supposant en première approximation que celle-ci n'est pas perturbée par les phénomènes d'induction, équivaut à un hyperboloïde tel que représenté à la figure 7c. Cette progression s'accompagne effectivement d'un certain épanouissement de la nappe, épanouissement sensiblement plus important que celui qui résulte dans les modes traditionnels d'une émission sans composante tangentielle.

La légère conicité du centrifugeur, qui a été reproduite sur les figures, est pratiquement sans influence sur les conditions d'émission. Pour cette raison, dans le cas des figures 7a et 7c, l'émission peut être faite à partir d'une fente annulaire "cylindrique" telle que représentée à la figure 1.

Les figures 7b et 7d présentent le cas d'une émission se situant en aval du col de l'hyperboloïde formé par l'écoulement gazeux. Il convient de remarquer que même dans ce cas, l'émission est localisée à proximité immédiate du centrifugeur C pour garder toute son efficacité au courant gazeux.

Dans le cas envisagé, la direction d'émission V n'est plus située dans le plan P. Elle se décompose comme précédemment en une composante axiale Va, une composante tangentielle Vt auxquelles s'ajoute une composante dite radiale Vr. Dans la forme présentée, cette composante radiale est "centrifuge". A cette configuration correspond un épanouissement plus sensible du voile de fibre dans la zone d'étirage. Dans tous les cas, la composante radiale de l'émission est relativement faible par rapport aux autres composantes.

## Revendications

1. Brûleur à combustion interne comprenant une chambre de combustion (11) de forme annulaire débouchant sur une ouverture de détente (12) et des éléments (13, 14) délimitant un orifice d'émission circulaire continu, la direction de cet orifice étant sensiblement parallèle à l'axe du brûleur, l'alimentation en mélange gazeux combustible étant faite dans la chambre de combustion (11) par une série de conduits d'alimentation (17) disposés à intervalles réguliers débouchant dans la chambre (11), ces conduits étant dirigés de sorte que l'alimentation des gaz se fasse le long d'une paroi (20) de la chambre de combustion (11) et à contre-courant du mouvement des gaz de combustion, lesquels longent une paroi (21) faisant face à la paroi (20) longée par le mélange gazeux combustible à son admission, caractérisé en ce que les conduits d'alimentation (17) sont dirigés de façon à faire un angle avec la parallèle à l'axe du brûleur supérieur à 30° et inférieur à 75° et, de préférence, inférieur à 60°.

2. Brûleur selon la revendication 1 dans lequel les conduits d'alimentation (17) sont formés dans une paroi réfractaire (20) constituant la chambre de combustion (11).

3. Brûleur selon la revendication 2 dans lequel les conduits d'alimentation (17) sont tous en communication avec un compartiment annulaire (18) distribuant le mélange combustible de façon uniforme sur l'ensemble des conduits (17), l'extrémité des conduits d'alimentation (17) débouchant dans le compartiment (18) étant munie d'une virole (29) qui protège cette extrémité et diaphragme le conduit (17).

## Claims

1. Internal combustion burner comprising a combustion chamber (11) of annular form discharging onto a pressure relief orifice (12) and elements (13, 14) defining a continuous circular emission orifice, the direction of this orifice being substantially parallel to the axis of the burner, the combustible gas mixture being supplied into the combustion chamber (11) via a plurality of supply ports (17) disposed at regular intervals discharging into the chamber (11), these ports being directed in such a way that the gases are supplied along a wall (20) of the combustion chamber (11) and counter-current to the movement of the combustion gases which pass along a wall (21) facing the wall (20) over which the combustible gas mixture passes upon admission, characterised in that the supply ports (17) are directed in such a way that they form an angle to a line parallel with the axis of the burner of more than 30° and less than 75° and preferably less than 60°.

2. Burner according to Claim 1, in which the supply ports (17) are formed in a refractory wall (20) forming the combustion chamber (11).

3. Burner according to Claim 2, in which the supply ports (17) all communicate with an annular compartment (18) distributing the combustible mixture uniformly over all the ports (17), the end of the supply ports (17) discharging into the compartment (18) being provided with a ring (29) which protects this end and provides a diaphragm for the port (17).

**Patentansprüche**

1. Brenner mit innerer Verbrennung, umfassend eine ringförmige Brennkammer (11), die in einer Entspannungsöffnung (12) ausmündet, und Elemente (13, 14), welche eine kontinuierliche, kreisförmige Ausströmöffnung begrenzen, deren Richtung im wesentlichen parallel zur Achse des Brenners liegt, wobei die Zufuhr einer brennbaren Gasmischung in die Brennkammer (11) durch eine Reihe von Speiseleitungen (17) erfolgt, die in regelmäßigen Abständen in die Kammer (11) ausmünden, wobei diese Leitungen derart ausgerichtet sind, daß die Einspeisung der Gase entlang einer Wand (20) der Brennkammer (11) im Gegenstrom zur Bewegung der Verbrennungsgase erfolgt, die entlang einer Wand (21) strömen, welche derjenigen Wand (20) gegenüberliegt, entlang der das einströmende Brenngasgemisch strömt, dadurch gekennzeichnet, daß die Speiseleitungen (17) so ausgerichtet sind, daß sie mit der Parallelen zur Achse des Brenners einen Winkel zwischen 30° und 75°, vorzugsweise von weniger als 60° einschließen.

2. Brenner nach Anspruch 1, bei dem die Speiseleitungen (17) in einer feuerfesten Wand (20) ausgebildet sind, welche die Brennkammer (11) bildet.

3. Brenner nach Anspruch 2, dadurch gekennzeichnet, daß die Speiseleitungen (17) sämtlich mit einer Ringkammer (18) in Verbindung stehen, welche das brennbare Gemisch gleichförmig über die Gesamtheit der Leitungen (17) verteilt, wobei das Ende der Speiseleitungen (17), welches in die Kammer (18) ausmündet, mit einem Ring (29) versehen ist, der dieses Ende schützt und eine Blende für die Leitung (17) bildet.

FIG.1

Résistance g/g

FIG.6

FIG.2

FIG.3

FIG.4

FIG.5

FIG.7a

FIG.7b

FIG.7c

FIG.7d